# EUROPÄISCHE PATENTANMELDUNG

(11) **EP 4 586 364 A2**
(43) Veröffentlichungstag der Anmeldung: **16.07.2025**
(21) Anmeldenummer: 25150428.8
(22) Anmeldetag: 07.01.2025
(51) Int. Cl.: H01M 10/42, H01M 50/213, H01M 50/247

(54) **AKKUPACK MIT ZWEI GEHÄUSETEILEN**

(30) Priorität: 11.01.2024 DE 102024100799
(71) Anmelder: Einhell Germany AG, 94405 Landau / Isar (DE)
(72) Erfinder: Mayr, Stefan, 84030 Landshut (DE)
(74) Vertreter: Canzler & Bergmeier Patentanwälte Partnerschaft mbB

(57) **Zusammenfassung**

Die Erfindung betrifft ein Akkupack (1) zum lösbaren Verbinden mit einem Elektrogerät mit einem Akkupackgehäuse (2), das eine Gehäuseaußenseite (3) aufweist, mit zumindest einem im Akkupackgehäuse (2) angeordneten Akkumulator (23), mit einer im Akkupackgehäuse (2) angeordneten Steuerungseinheit (24) und mit einer an der Gehäuseaußenseite (3) ausgebildeten Geräteschnittstelle (4) zum lösbaren Verbinden des Akkupacks (1) mit dem Elektrogerät. Erfindungsgemäß umfasst das Akkupackgehäuse (2) ein erstes Gehäuseteil (5) und ein zweites Gehäuseteil (6). Das erste Gehäuseteil (5) umfasst eine erste Innenschnittstelle (7) und das zweite Gehäuseteil (6) eine mit der ersten Innenschnittstelle (7) korrespondierende zweite Innenschnittstelle (8), über die das erste Gehäuseteil (5) und das zweite Gehäuseteil (6) mechanisch und elektrisch miteinander verbindbar sind.

## Beschreibung

Die vorliegende Erfindung betrifft ein Akkupack zum lösbaren Verbinden mit einem Elektrogerät mit einem Akkupackgehäuse, das eine Gehäuseaußenseite aufweist, mit zumindest einem im Akkupackgehäuse angeordneten Ackumulator, mit einer im Akkupackgehäuse angeordneten, elektronischen Steuerungseinheit und mit einer an der Gehäuseaußenseite ausgebildeten Geräteschnittstelle zum lösbaren Verbinden des Akkupacks mit dem Elektrogerät. Des Weiteren betrifft die Erfindung ein erstes Gehäuseteil und ein zweites Gehäuseteil sowie deren Verwendung in einem vorstehenden Akkupack.

Aus der DE 10 2021 120 180 A1 ist ein Akkupack bekannt. Der Akkupack hat eine Unterschale und eine Oberschale. Diese Schalen sind durch Steck- oder Klemmverbindungen miteinander verbunden. Sie bilden ein Gehäuse mit einem Innenraum. In diesem Innenraum sind mehrere in Reihe geschaltete Akkumulatorzellen angeordnet. Die Oberschale verfügt über einen Kontaktbereich. Dieser dient dazu, das Gehäuse mechanisch mit einem weiteren Gehäuse des Elektrogeräts zu verbinden. Es ist auch eine elektrische Verbindung möglich. Nachteil des aus dem Stand der Technik bekannten Akkupacks ist, dass dessen elektrische Speicherkapazität nicht verändert werden kann. Des Weiteren kann dieses Akkupack nicht für unterschiedliche Elektrogeräte mit unterschiedlichen elektrischen oder mechanischen Spezifikationen verwendet werden. Darüber hinaus muss bei einem Defekt das gesamte Ackupack entsorgt werden.

Aufgabe der vorliegenden Erfindung ist es somit, die aus dem Stand der Technik bekannten Nachteile zu beseitigen, insbesondere ein Akkupack zu schaffen, das flexibel für unterschiedlichen Anwendungsszenarien eingesetzt werden kann, auf diese angepasst werden kann und/oder sich durch einen reduzierten Instandhaltungsaufwand und durch reduzierte Instandhaltungskosten auszeichnet.

Die Aufgabe wird gelöst durch ein Akkupack, ein erstes Gehäuseteil und/oder ein zweites Gehäuseteil mit den Merkmalen der unabhängigen Ansprüche. Vorteilhafte oder bevorzugte Ausführungen sind jeweils Gegenstand eines korrespondierenden abhängigen Anspruchs.

Vorgeschlagen wird ein Akkupack zum lösbaren Verbinden mit einem Elektrogerät. Das Akkupack umfasst ein Akkupackgehäuse mit einer Gehäuseaußenseite und einem im Akkupackgehäuse angeordneten Akkumulator. Durch die Integration des Akkumulators im Akkupackgehäuse wird eine kompakte und raumsparende Anordnung erreicht, was die Handhabbarkeit verbessert. Des Weiteren umfasst das Akkupack eine im Akkupackgehäuse angeordnete, elektronische Steuerungseinheit. Diese Steuerungseinheit ermöglicht vorzugsweise eine präzise Kontrolle und Überwachung des Ladezustands des Akkumulators, was zur Erhöhung der Sicherheit und Effizienz beiträgt. An der Gehäuseaußenseite ist eine Geräteschnittstelle zum lösbaren Verbinden des Akkupacks mit dem Elektrogerät ausgebildet. Die Geräteschnittstelle erlaubt eine schnelle und einfache Verbindung mit verschiedenen Elektrogeräten, was die Flexibilität in der Anwendung erhöht. Das Akkupackgehäuse umfasst ein erstes und ein zweites Gehäuseteil. Das erste Gehäuseteil weist eine erste Innenschnittstelle und das zweite Gehäuseteil eine korrespondierende zweite Innenschnittstelle auf. Über diese sind das erste und das zweite Gehäuseteil mechanisch und elektrisch miteinander verbindbar. Die mechanische und elektrische Verbindung der Gehäuseteile trägt zu einer zuverlässigen und stabilen Energieübertragung bei. Wenn ein Defekt in einem der beiden Gehäuseteile vorliegt, muss demnach nicht das gesamte Akkupack entsorgt werden. Stattdessen kann das defekte Gehäuseteil mit einem neuen oder instandgesetzten Gehäuseteil ersetzt werden. Dies ermöglicht eine kosteneffiziente und umweltschonende Reparatur oder Aufrüstung des Akkupacks. Des Weiteren kann das zweite Gehäuseteil für unterschiedliche Anwendungszwecke mit unterschiedlichen ersten Gehäuseteilen kombiniert werden. Demnach kann es beispielsweise mehrere erste Gehäuseteile mit zueinander unterschiedlichen elektronischen Spezifikationen, insbesondere Speicherkapazitäten, geben, die alle mit dem zweiten Gehäuseteil verbunden werden können. Infolgedessen benötigt ein Benutzer nur ein zweites Gehäuseteil und kann mit diesem mehrere unterschiedliche erste Gehäuseteile kombinieren. Hierdurch können die Anschaffungskosten für den Endverbraucher reduziert werden. Die Möglichkeit, verschiedene erste Gehäuseteile mit unterschiedlichen Spezifikationen zu kombinieren, erhöht die Anpassungsfähigkeit des Akkupacks an unterschiedliche Betriebsbedingungen und Nutzeranforderungen. Zusätzlich oder alternativ ist es möglich, das erste Gehäuseteil mit unterschiedlichen zweiten Gehäuseteilen zu kombinieren. Dies bietet weitere Flexibilität, um das Akkupack an verschiedene Elektrogeräte anzupassen. Demnach kann es beispielsweise mehrere zweite Gehäuseteile mit zueinander unterschiedlichen mechanischen Spezifikationen, insbesondere mit zueinander unterschiedlichen Gehäuseschnittstellen, geben. Zusätzlich oder alternativ können diese zueinander unterschiedlichen zweiten Gehäuseteile zueinander unterschiedliche elektronische Spezifikationen, insbesondere unterschiedliche Geräteschutzsteuerungen, aufweisen. Vorteilhafterweise kann das erste Gehäuseteil über die zueinander unterschiedlichen zweiten Gehäuseteile mit einer Vielzahl von unterschiedlichen Endgeräten verbunden und sicher betrieben werden.

Vorteilhaft ist es, wenn das erste und/oder zweite Gehäuseteil jeweils ein, insbesondere geschlossenes, Gehäuseteilgehäuse umfassen. Infolgedessen können im Inneren des Gehäuseteilgehäuses elektronische Komponenten geschützt aufgenommen werden. In einer vorteilhaften Weiterbildung der Erfindung bilden die beiden Gehäuseteilgehäuse das Akkupackgehäuse aus.

Es ist vorteilhaft, wenn das erste Gehäuseteil eine erste Gehäuseinnenseite des Akkupackgehäuses und das zweite Gehäuseteil eine zweite Gehäuseinnenseite des Akkupackgehäuses umfasst.

Zusätzlich oder alternativ ist es vorteilhaft, wenn im verbundenen Zustand der beiden Gehäuseteile die erste Gehäuseinnenseite und die zweite Gehäuseinnenseite im Inneren des Akkupackgehäuses angeordnet sind und/oder sich gegenseitig zumindest teilweise überdecken.

Gemäß einer vorteilhaften Weiterbildung der Erfindung sind die erste Innenschnittstelle an der ersten Gehäuseinnenseite und die zweite Innenschnittstelle an der zweiten Gehäuseinnenseite angeordnet.

Des Weiteren ist es vorteilhaft, wenn die beiden Innenschnittstellen derart ausgebildet sind, dass die Gehäuseteile zum Verbinden und/oder Lösen, insbesondere translatorisch, zueinander bewegbar sind.

Darüber hinaus ist es vorteilhaft, wenn zwischen den beiden Gehäuseteilen ein Führungsmechanismus ausgebildet ist. Dieser führt die beiden Gehäuseteile beim Verbinden und/oder Lösen, insbesondere translatorisch, zueinander.

In diesem Zusammenhang ist es vorteilhaft, wenn die erste Innenschnittstelle ein erstes Führungselement und die zweite Innenschnittstelle ein korrespondierendes zweites Führungselement umfasst.

Vorteilhaft ist es, wenn eines der korrespondierenden Führungselemente als Führungsschiene und das andere als Führungsschlitten ausgebildet ist.

Es ist vorteilhaft, wenn zwischen den beiden Innenschnittstellen ein Endanschlag ausgebildet ist, der die, insbesondere translatorische, Bewegbarkeit zwischen den beiden Gehäuseteilen beim Verbinden auf eine Endlage begrenzt.

Vorteilhaft ist es, wenn die erste Innenschnittstelle zumindest ein elektrisches erstes Kontaktelement zum Übertragen von Strom und/oder Daten aufweist. Zusätzlich oder alternativ ist es vorteilhaft, wenn die zweite Innenschnittstelle zumindest ein mit dem ersten Kontaktelement korrespondierendes zweites Kontaktelement umfasst.

Es ist vorteilhaft, wenn das erste und/oder das zweite Kontaktelement federbeaufschlagt in eine erste Position gedrückt ist. In dieser ersten Position steht das Kontaktelement vorzugsweise über die zugeordnete Gehäuseinnenseite vor.

Gemäß einer vorteilhaften Weiterbildung der Erfindung ist das Kontaktelement beim Verbinden der Gehäuseteile aus seiner hervorstehenden ersten Position in eine zurückgedrängte zweite Position bewegbar.

Darüber hinaus ist es vorteilhaft, wenn das erste Kontaktelement und/oder das zweite Kontaktelement eine Anlaufschräge aufweisen. Über diese ist das elektrische Kontaktelement beim Verbinden der beiden Gehäuseteile von einem korrespondierenden Anschlagselement des anderen Gehäuseteils aus seiner ersten Position in seine zweite Position bewegbar.

Vorteilhaft ist es, das erste Kontaktelement und das zweite Kontaktelement ein Kontaktpaar ausbildet. Vorzugsweise umfasst das Akkupack zumindest ein erstes Kontaktpaar, insbesondere ein Stromkontaktpaar, zur Stromübertragung. Das erste Kontaktpaar ist vorzugsweise bidirektional ausgebildet, so dass elektrischer Strom gemäß einer ersten Stromfließrichtung vom ersten Gehäuseteil zum zweiten Gehäuseteil und gemäß einer entgegengesetzten zweiten Stromfließrichtung vom zweiten Gehäuseteil zum ersten Gehäuseteil fließen kann. Demnach kann über das erste Kontaktpaar zum Betreiben eines Endgerätes oder zum Laden des Akkupacks elektrischer Strom zwischen den beiden Gehäuseteilen übertragen werden. Beim Betreiben eines Endgerätes wird elektrischer Strom von den Akkumulatoren über das erste Kontaktpaar zur Geräteschnittstelle, insbesondere an zumindest einen Stromkontakt der Geräteschnittstelle, übertragen. Beim Laden des Akkupacks wird elektrischer Strom von der Geräteschnittstelle, insbesondere von dem zumindest einen Stromkontakt, über das erste Kontaktpaar zu den Akkumulatoren übertragen.

Zusätzlich ist es vorteilhaft, wenn das Akkupack zumindest ein zweites Kontaktpaar, insbesondere ein Datenkontaktpaar, zur Datenübertragung umfasst. Das zweite Kontaktpaar ist vorzugsweise bidirektional ausgebildet, so dass elektrische Daten gemäß einer ersten Datenübertragungsrichtung vom ersten Gehäuseteil zum zweiten Gehäuseteil und gemäß einer entgegengesetzten zweiten Datenübertragungsrichtung vom zweiten Gehäuseteil zum ersten Gehäuseteil übertragen werden können. Demnach können über das zweite Kontaktpaar Daten, insbesondere Zustands- und/oder Steuerungsdaten, zwischen den beiden Gehäuseteilen übertragen werden. Die Datenübertragung kann hierbei insbesondere von der Akkupackschutzsteuerung des ersten Gehäuseteils über das zweite Kontaktpaar an die Geräteschutzsteuerung des zweiten Gehäuseteils erfolgen. Zusätzlich oder alternativ kann die Datenübertragung von der Akkupackschutzsteuerung des ersten Gehäuseteils über das zweite Kontaktpaar an die Geräteschnittstelle, insbesondere einen Datenkontakt der Geräteschnittstelle, erfolgen. Dies kann unmittelbar oder mittelbar über die Geräteschutzsteuerung stattfinden. Zusätzlich oder alternativ können Daten von der Geräteschnittstelle, insbesondere vom Datenkontakt, und/oder von der Geräteschutzsteuerung in der entgegengesetzten Richtung vom zweiten Gehäuseteil an das erste Gehäuseteil, insbesondere die Akkupackschutzsteuerung, übertragen werden.

Vorzugsweise ist das zumindest eine erste Kontaktpaar und das zumindest eine zweite Kontaktpaar elektrisch voneinander isoliert und/oder getrennt und/oder gemäß der nachfolgenden Beschreibung ausgebildet.

In einer vorteilhaften Weiterbildung ist zwischen den beiden Gehäuseteilen, insbesondere zwischen den korrespondierenden Innenschnittstellen, ein Verriegelungsmechanismus ausgebildet. Dieser verriegelt die Gehäuseteile im verbundenen Zustand, insbesondere lösbar und/oder formschlüssig, in ihrer Endlage.

Vorteilhaft ist es, wenn der Verriegelungsmechanismus ein an einem der beiden Gehäuseteile ausgebildetes erstes Verriegelungselement und eine am anderen Gehäuseteil ausgebildete, korrespondierende erste Verriegelungsaussparung umfasst. In diese kann das Verriegelungselement in seiner Verriegelungsstellung formschlüssig eingreifen. Das erste Verriegelungselement ist vorzugsweise am ersten Gehäuseteil ausgebildet.

Es ist vorteilhaft, wenn der Verriegelungsmechanismus ein erstes Entriegelungselement umfasst. Dieses ist vorzugsweise vom Benutzer zur Lösung der Verriegelung manuell betätigbar.

In einer vorteilhaften Weiterbildung der Erfindung ist die Geräteschnittstelle am zweiten Gehäuseteil ausgebildet.

Vorteilhaft ist es, wenn das erste Entriegelungselement am zweiten Gehäuseteil derart im Bereich der Geräteschnittstelle angeordnet ist, dass dieses im mit dem Elektrogerät verbundenen Zustand zumindest teilweise von dem Elektrogerät verdeckt ist und/oder vom Benutzer nicht betätigbar ist.

Alternativ ist es vorteilhaft, wenn das erste Entriegelungselement von der Geräteschnittstelle derart beabstandet angeordnet ist, dass das erste Entriegelungselement im mit dem Elektrogerät verbundenen Zustand vom Benutzer betätigt und der erste Gehäuseteil vom zweiten Gehäuseteil entfernt werden kann.

Es ist vorteilhaft, wenn das erste Verriegelungselement mittels des ersten Entriegelungselements von dem Benutzer aus seiner Verriegelungsstellung in seine Entriegelungsstellung bewegbar ist.

Die erste Innenschnittstelle des ersten Gehäuseteils und die Geräteschnittstelle des zweiten Gehäuseteils sind nicht-korrespondierend und/oder zueinander unterschiedlich ausgebildet. Diese nicht-korrespondierende und unterschiedliche Ausbildung der Schnittstellen trägt dazu bei, Fehlverbindungen zu vermeiden und gewährleistet eine korrekte und sichere Verbindung zwischen den Gehäuseteilen und dem Elektrogerät.

Vorteilhaft ist es, wenn die erste Innenschnittstelle derart ausgebildet ist, dass diese nur und/oder ausschließlich mit der zweiten Innenschnittstelle verbindbar ist. Des Weiteren ist die zweite Innenschnittstelle des zweiten Gehäuseteils vorzugsweise zur Geräteschnittstelle und/oder zu der mit der Geräteschnittstelle korrespondierend ausgebildeten Schnittstelle des Elektrogeräts unterschiedlich ausgebildet. Vorzugsweise ist die erste Innenschnittstelle des ersten Gehäuseteils derart ausgebildet, dass das erste Gehäuseteil über seine erste Innenschnittstelle nicht, insbesondere nicht unmittelbar, mit einem Elektrogerät verbindbar ist.

Vorteilhaft ist es, wenn die Geräteschnittstelle ein zweites Entriegelungselement zum Lösen der Arretierung zwischen dem Akkupack und dem Elektrogerät umfasst. Das zweite Entriegelungselement ermöglicht eine einfache und schnelle Trennung des Akkupacks vom Elektrogerät, was die Benutzerfreundlichkeit erhöht.

Des Weiteren ist es vorteilhaft, wenn die Geräteschnittstelle ein zweites Verriegelungselement umfasst. Dieses kann in eine korrespondierende zweite Verriegelungsaussparung des Elektrogeräts formschlüssig eingreifen. Das zweite Verriegelungselement sorgt für eine sichere und feste Verbindung des Akkupacks mit dem Elektrogerät, was unbeabsichtigtes Lösen verhindert.

Vorteilhaft ist es, wenn das zweite Verriegelungselement mittels des zweiten Entriegelungselements, insbesondere von dem Benutzer aus seiner Verriegelungsstellung in seine Entriegelungsstellung, bewegbar ist. Diese Funktion erlaubt es dem Benutzer, die Verbindung zwischen Akkupack und Elektrogerät schnell und mühelos zu lösen, was den Komfort bei der Handhabung verbessert.

Der zumindest eine Akkumulator ist vorzugsweise in dem ersten Gehäuseteil angeordnet.

Vorteilhaft ist es, wenn die Steuerungseinheit derart ausgebildet ist, dass mit dieser ein Lade- und/oder Entladeprozess des zumindest einen Akkumulators gesteuert werden kann. Die Steuerungseinheit umfasst vorzugsweise eine Geräteschutzsteuerung und/oder eine Akkupackschutzsteuerung.

Es ist vorteilhaft, wenn die Steuerungseinheit zumindest teilweise im zweiten Gehäuseteil angeordnet ist. Dabei ist vorzugsweise die Geräteschutzsteuerung im zweiten Gehäuseteil angeordnet. Die Akkupackschutzsteuerung kann im ersten oder im zweiten Gehäuseteil angeordnet sein.

Vorteilhaft ist es, wenn die Geräteschutzsteuerung eine erste Leiterplatte und/oder einen elektronischen ersten Chip umfasst. Der erste Chip ist vorteilhafterweise mit der ersten Leiterplatte verbunden.

Vorteilhafterweise umfasst die Akkupackschutzsteuerung eine zweite Leiterplatte und/oder einen elektronischen zweiten Chip. Dieser ist vorzugsweise mit der zweiten Leiterplatte verbunden.

Des Weiteren ist es vorteilhaft, wenn das zweite Gehäuseteil eine Stromleitung umfasst. Diese verbindet vorzugsweise die zweite Innenschnittstelle und die Geräteschnittstelle elektrisch miteinander. So kann zum Betreiben des Elektrogeräts elektrischer Strom vom ersten Gehäuseteil zum Elektrogerät fließen.

Gemäß einer vorteilhaften Weiterbildung der Erfindung umfasst das zweite Gehäuseteil eine elektronische Adaptereinheit. Diese ist vorzugsweise derart ausgebildet, dass sie für ein im bestimmungsgemäßen Gebrauch an der Geräteschnittstelle angeschlossenes Elektrogerät zumindest einen gerätespezifischen Steuerparameter, insbesondere einen Abschaltstrom, bestimmen kann. Darüber hinaus ist es vorteilhaft, wenn die elektronische Adaptereinheit derart ausgebildet ist, dass sie selbstständig erkennen kann, wenn im bestimmungsgemäßen Gebrauch ein Elektrogerät mit der Geräteschnittstelle gekoppelt ist.

Vorteilhafterweise ist die elektronische Adaptereinheit derart ausgebildet, dass sie bestimmungsgemäßen Gebrauch den gerätespezifischen Steuerparameter für das an der Geräteschnittstelle angeschlossene Elektrogerät anhand eines gerätespezifischen Identifikationswertes ermittelt. Vorteilhaft ist es, wenn der gerätespezifische Identifikationswert ein gerätespezifischer Messwert, insbesondere ein Widerstandswert eines elektrischen Widerstands des an der Geräteschnittstelle angeschlossenen Elektrogeräts und/oder ein Strommesswert des an der Geräteschnittstelle angeschlossenen Elektrogeräts, ist. Vorteilhaft ist es, wenn die Adaptereinheit derart ausgebildet ist, dass diese den gerätespezifischen Identifikationswert erfassen, insbesondere messen, kann.

Es ist vorteilhaft, wenn der gerätespezifische Identifikationswert eine Bitfolge und/oder ein elektrisches Signal, insbesondere ein Abschaltsignal, des an der Geräteschnittstelle angeschlossenen Elektrogeräts ist.

Vorteilhaft ist es, wenn in der elektronischen Adaptereinheit, insbesondere in einer Liste, für mehrere Elektrogeräte jeweils zumindest ein gerätespezifischer Steuerparameter, insbesondere zusammen mit einem Gerätekennwert, abgespeichert ist.

Vorteilhafterweise ist die elektronische Adaptereinheit derart ausgebildet, dass sie im bestimmungsgemäßen Gebrauch den gerätespezifischen Identifikationswert des an der Geräteschnittstelle angeschlossenen Elektrogeräts mit den abgespeicherten Gerätekennwerten abgleicht. Bei Übereinstimmung selektiert die elektronische Adaptereinheit vorzugsweise den zumindest einen zum ermittelten Gerätekennwert dazugehörigen gerätespezifischen Steuerparameter. Es ist vorteilhaft, wenn die elektronische Adaptereinheit derart ausgebildet ist, dass diese im bestimmungsgemäßen Gebrauch den zumindest einen ermittelten Steuerparameter an die Geräteschutzsteuerung übermittelt.

Vorteilhaft ist es, wenn das Akkupack einen Schutzschalter, insbesondere einen MOSFET, aufweist. Vorteilhaft ist es, wenn der Schutzschalter im ersten oder zweiten Gehäuseteil angeordnet ist. Die Geräteschutzsteuerung ist in einer vorteilhaften Weiterbildung der Erfindung derart ausgebildet, dass sie den Schutzschalter unter Berücksichtigung des Steuerparameters schaltet und/oder steuert.

Vorteilhaft ist es, wenn die Geräteschutzsteuerung derart ausgebildet ist, dass diese im bestimmungsgemäßen Gebrauch den Schutzschalter zum Unterbrechen und/oder Reduzieren eines Stromflusses schaltet. Zusätzlich oder alternativ ist es vorteilhaft, wenn die Geräteschutzsteuerung derart ausgebildet ist, dass diese im bestimmungsgemäßen Gebrauch den Schutzschalter zum Unterbrechen und/oder Reduzieren eines Stromflusses steuert, wenn ein von zumindest einem Erfassungsmittel erfasster Zustandsparameter den gerätespezifischen Steuerparameter übersteigt.

Vorteilhaft ist es, wenn das Erfassungsmittel ist im ersten und/oder zweiten Gehäuseteil angeordnet ist. Es ist vorteilhaft, wenn das Erfassungsmittel derart ausgebildet ist, dass mit diesem eine Stromstärke, eine Stromspannung, ein Ladezustand, eine Temperatur und/oder eine Erschütterung erfasst und/oder an die Geräteschutzsteuerung übermittelt werden kann.

Vorteilhafterweise ist die Akkupackschutzsteuerung derart ausgebildet, dass sie im bestimmungsgemäßen Gebrauch den Schutzschalter zum Unterbrechen und/oder Reduzieren eines Stromflusses schaltet und/oder steuert, wenn ein von dem zumindest einen Erfassungsmittel erfasster Zustandsparameter einen Akkupackparameter übersteigt und/oder unterschreitet.

Vorteilhaft ist es, wenn der zweite Gehäuseteil eine Anzeige zum Anzeigen des Ladezustands und ein Betätigungselement zum Schalten, insbesondere zum Ein- und Ausschalten, der Anzeige aufweist.

Vorgeschlagen wird ein erstes Gehäuseteil eines Akkupackgehäuses eines Akkupacks das eine erste Innenschnittstelle umfasst, die mit einer zweiten Innenschnittstelle eines zweiten Gehäuseteils des Akkupackgehäuses derart korrespondiert, dass das erste Gehäuseteil mechanisch und elektrisch mit dem zweiten Gehäuseteil verbindbar ist. Vorzugsweise ist das erste Gehäuseteil für das Akkupack gemäß der vorangegangenen Beschreibung vorgesehen und/oder gemäß der vorangegangenen Beschreibung ausgebildet, wobei die vorstehend genannten Merkmale des ersten Gehäuseteils einzeln oder in beliebiger Kombination vorhanden sein können.

Vorgeschlagen wird eine Verwendung eines ersten Gehäuseteils in einem Akkupack. Das erste Gehäuseteil und/oder das Akkupack ist vorzugsweise gemäß der vorangegangenen Beschreibung ausgebildet und/oder wird derart verwendet, wobei die genannten Merkmale einzeln oder in beliebiger Kombination vorhanden sein können.

Vorgeschlagen wird ein zweites Gehäuseteil eines Akkupackgehäuses eines Akkupacks, das eine zweite Innenschnittstelle umfasst, die mit einer ersten Innenschnittstelle eines ersten Gehäuseteils des Akkupackgehäuses derart korrespondiert, dass das zweite Gehäuseteil mechanisch und elektrisch mit dem ersten Gehäuseteil verbindbar ist. Vorzugsweise ist das zweite Gehäuseteil für das Akkupack gemäß der vorangegangenen Beschreibung vorgesehen und/oder gemäß der vorangegangenen Beschreibung ausgebildet, wobei die vorstehend genannten Merkmale des zweiten Gehäuseteils einzeln oder in beliebiger Kombination vorhanden sein können.

Vorgeschlagen wird eine Verwendung eines zweiten Gehäuseteils in einem Akkupack. Das zweite Gehäuseteil und/oder das Akkupack ist vorzugsweise gemäß der vorangegangenen Beschreibung ausgebildet und/oder wird derart verwendet, wobei die genannten Merkmale einzeln oder in beliebiger Kombination vorhanden sein können. Die Verwendung des zweiten Gehäuseteils gemäß dieser Beschreibung ermöglicht eine vielseitige und modulare Gestaltung des Akkupacks, was die Anpassungsfähigkeit und Wirtschaftlichkeit für den Benutzer steigert.

Weitere Vorteile der Erfindung sind in den nachfolgenden Ausführungsbeispielen beschrieben. Es zeigt:
- **Figur 1**: ein Akkupack in einer Seitenansicht mit einem ersten Gehäuseteil und einem zweiten Gehäuseteil, die in dem dargestellten Betriebszustand an zwei korrespondierenden Innenschnittstellen lösbar miteinander verbunden sind,
- **Figur 2**: das Akkupack aus Figur 1 in einer Seitenansicht mit dem ersten Gehäuseteil und dem zweiten Gehäuseteil, die in dem dargestellten Wechselzustand voneinander getrennt sind,
- **Figur 3**: das Akkupack aus Figur 1 und 2 im Wechselzustand in einer detaillierten seitlichen Schnittansicht,
- **Figur 4 bis 7**: das erste und zweite Gehäuseteil zu unterschiedlichen Zeitpunkten während des Verbindens in einer detaillierten seitlichen Schnittansicht und
- **Figur 8**: das Akkupack zum Zeitpunkt des Lösens bei betätigtem ersten Entriegelungselement in einer detaillierten seitlichen Schnittansicht.

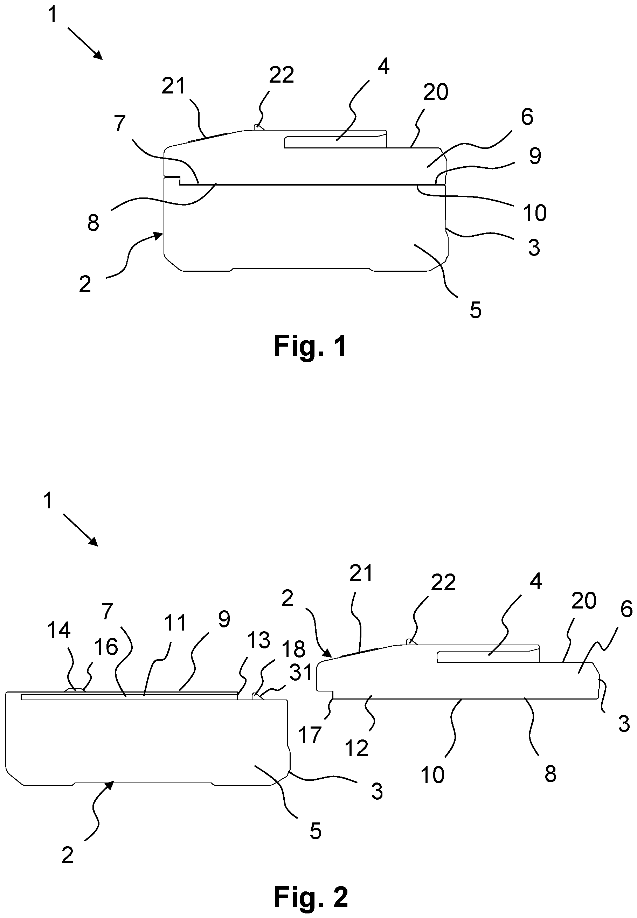

Die Figur 1 zeigt eine Seitenansicht eines Akkupacks 1, welches aus mehreren Komponenten zusammengesetzt ist. Das Akkupack 1 umfasst ein Akkupackgehäuse 2. Dieses setzt sich aus einem ersten Gehäuseteil 5 sowie einem zweiten Gehäuseteil 6 zusammen. Diese beiden Gehäuseteile 5, 6 sind so konstruiert, dass sie im Betriebszustand lösbar aneinandergefügt werden können. Die Verbindung erfolgt hierbei über zwei korrespondierende Innenschnittstellen 7, 8. Demnach ist eine erste Innenschnittstelle 7 am ersten Gehäuseteil 5 und eine korrespondierende zweite Innenschnittstelle 8 am zweiten Gehäuseteil 6 ausgebildet.

Das Akkupackgehäuse 2 weist eine Gehäuseaußenseite 3 auf. An dieser Gehäuseaußenseite 3 des Akkupackgehäuses 2 befindet sich eine Geräteschnittstelle 4, die für den lösbaren Anschluss des Akkupacks 1 an ein entsprechendes, vorliegend nicht dargestelltes, Elektrogerät ausgelegt ist. Die Konstruktion des Akkupacks 1 ist dabei so vorteilhaft gewählt, dass im Falle eines Defekts an einem der Gehäuseteile 5, 6, nicht das gesamte Akkupack 1 entsorgt werden muss. Stattdessen ermöglicht die modulare Ausgestaltung des Akkupacks 1, dass das beschädigte Gehäuseteil, nämlich das erste Gehäuseteil 5 oder das zweite Gehäuseteil 6, durch ein neues oder aufbereitetes Gehäuseteil 5, 6 ausgetauscht werden kann. Dies bietet nicht nur einen nachhaltigen Vorteil, sondern auch eine kosteneffiziente Lösung für den Endverbraucher.

Ein weiterer Vorteil der vorliegenden Erfindung besteht darin, dass das zweite Gehäuseteil 6 in Kombination mit verschiedenen ersten Gehäuseteilen 5 verwendet werden kann. Hierbei können die verschiedenen ersten Gehäuseteile 5 zueinander unterschiedliche elektronische Spezifikationen aufweisen. Dies ermöglicht es dem Benutzer, das zweite Gehäuseteil 6 mit mehreren, insbesondere zueinander unterschiedlichen, ersten Gehäuseteilen 5 zu verwenden, was eine Anpassung an unterschiedliche Anforderungen ermöglicht und somit die Flexibilität und die Wirtschaftlichkeit des Gesamtsystems erhöht.

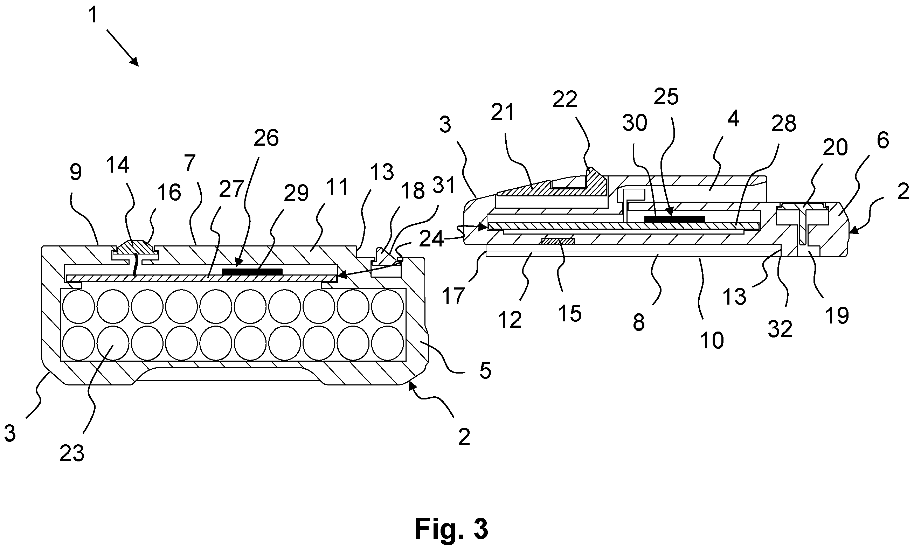

Die Geräteschnittstelle 4 umfasst weiterhin ein zweites Entriegelungselement 21 sowie ein zweites Verriegelungselement 22. Das zweite Verriegelungselement 22 ist dabei so gestaltet, dass es in eine vorliegend in Figur 1 nicht dargestellte, korrespondierende Verriegelungsaussparung des Elektrogeräts eingreifen kann. Dies ermöglicht eine stabile Verbindung zwischen dem Ackupack 1 und dem vorliegend nicht dargestellten Elektrogerät. Über das zweite Entriegelungselement 21 kann der Benutzer das zweite Verriegelungselement 22 von einer in Figur 3 dargestellten Verriegelungsstellung in eine zurückgedrängte Entriegelungsstellung überführen, was das Lösen der Arretierung zwischen dem Akkupack 1 und dem Elektrogerät bewirkt.

Gemäß Figur 1 beinhaltet das erste Gehäuseteil 5 eine erste Gehäuseinnenseite 9 und das zweite Gehäuseteil 6 eine zweite Gehäuseinnenseite 10. Diese Gehäuseinnenseiten 9, 10 sind am jeweiligen Gehäuseteil 5, 6 derart angeordnet, dass sie im zusammengesetzten und/oder verbundenen Zustand der Gehäuseteile 5, 6 im Inneren des Akkupackgehäuses 2 positioniert sind. Des Weiteren überdecken sich die beiden korrespondierenden Gehäuseinnenseiten 9, 10 zumindest teilweise. Infolgedessen bilden diese im zusammengesetzten und/oder verbundenen Zustand des Akkupackgehäuses 2 die Gehäuseaußenseite 3 des Akkupackgehäuses 2 nicht aus. Des Weiteren sind die Innenschnittstellen 7, 8 direkt an diesen Gehäuseinnenseiten 9, 10 angebracht, was eine präzise und stabile Verbindung der Gehäuseteile 5, 6 ermöglicht.

Das in Figur 1 dargestellte Akkupackgehäuse 2 ermöglicht es auch, dass das erste Gehäuseteil 5 mit unterschiedlichen zweiten Gehäuseteilen 6 kombiniert werden kann, die vorzugsweise diverse mechanische und/oder elektronische Spezifikationen aufweisen können. Diese Variabilität erlaubt es, das Akkupack 1 mit einer breiten Palette von Endgeräten zu koppeln und zu betreiben, was die universelle Anwendbarkeit und die Benutzerfreundlichkeit des Akkupacks 1 unterstreicht.

Die Figur 2 zeigt das Akkupack 1 in einem Zustand, in welchem das erste Gehäuseteil 5 und das zweite Gehäuseteil 6 voneinander separiert sind. Dieser Wechselzustand ermöglicht eine detaillierte Betrachtung der Konstruktionsmerkmale, die für das Verbinden und Lösen der Gehäuseteile 5, 6 relevant sind. Die Figur 2 zeigt deutlich, dass die beiden Gehäuseteile 5, 6 entlang der Innenschnittstellen 7, 8 translatorisch zueinander bewegbar sind.

Wie aus der Figur 2 hervorgeht, ist zwischen den beiden Innenschnittstellen 7, 8 ein Führungsmechanismus ausgebildet. Dieser Führungsmechanismus dient dazu, die Gehäuseteile 5, 6 beim Verbinden und Lösen zu führen, um eine präzise und einfache Handhabung zu gewährleisten. Die erste Innenschnittstelle 7 ist mit einem ersten Führungselement 11 ausgestattet, während die zweite Innenschnittstelle 8 ein korrespondierendes zweites Führungselement 12 aufweist. Eine Schnittansicht dieser beiden Führungselemente 11, 12 ist aus Figur 3 ersichtlich. Diese Führungselemente 11, 12 sind so konzipiert, dass eines als Führungsschiene und das andere als Führungsschlitten fungiert, was eine reibungslose und exakte translatorische Bewegung der Gehäuseteile 5, 6 zueinander ermöglicht.

Des Weiteren zeigt die Figur 2 und Figur 3 zumindest einen Endanschlag 13, der zwischen den Innenschnittstellen 7, 8 ausgebildet ist. Der Endanschlag 13 begrenzt die Beweglichkeit der Gehäuseteile 5, 6 im Verlauf des Verbindens auf eine definierte Endlage, was zur Sicherheit und Präzision beim Zusammenbau des Akkupacks 1 beiträgt. Dieser Endanschlag 13 verhindert eine Überbewegung der Gehäuseteile 5, 6 und stellt sicher, dass diese in der korrekten Position einrasten. Wie insbesondere aus der in Figur 3 dargestellten Schnittansicht hervorgeht, umfasst sowohl das erste Gehäuseteil 5 als auch das zweite Gehäuseteil 6 jeweils einen Endanschlag 13, die im verbundenen Zustand miteinander korrespondieren bzw. aneinander anliegen.

In der Seitenansicht der Figur 2 ist zu erkennen, dass das Akkupack 1 konstruktiv so gestaltet ist, dass im Falle einer erforderlichen Wartung oder beim Austausch eines defekten Teils die Gehäuseteile 5, 6 ohne großen Aufwand separiert werden können. Diese strukturelle Ausgestaltung trägt zur Langlebigkeit und zur Benutzerfreundlichkeit des Akkupacks 1 bei, indem es eine einfache Wartung und einen schnellen Teileaustausch ohne die Notwendigkeit einer kompletten Neuanschaffung ermöglicht.

Die Darstellung der Figur 2 verdeutlicht die einfache Konstruktion und die benutzerorientierte Funktionalität des Akkupacks 1. Die Trennbarkeit der Gehäuseteile 5, 6 und die zugehörigen Führungselemente 11, 12 tragen maßgeblich zur Modularität und Anpassungsfähigkeit des Akkupacks 1 an unterschiedliche Anforderungen und Bedingungen bei.

Die Figur 3 zeigt das Akkupack 1 in einem Längsschnitt, in dem die beiden Gehäuseteile 5, 6 voneinander gelöst und/oder getrennt sind. Diese Ansicht gewährt detaillierte Informationen über die Anordnung der verschiedenen Komponenten innerhalb des Akkupackgehäuses 2 und/oder innerhalb des jeweiligen Gehäuseteils 5, 6. Demnach geht aus der in Figur 3 dargestellten seitlichen Längsschnittansicht des Akkupacks 1 hervor, dass das Akkupack 1 zumindest einen Akkumulator 23 aufweist. In dem vorliegenden Ausführungsbeispiel weist das Akkupack 1 eine Vielzahl von Akkumulatoren 23 auf, von denen aus Gründen der Übersichtlichkeit nur einer mit einem Bezugszeichen versehen ist. Die Akkumulatoren 23 sind, insbesondere alle, im Inneren des ersten Gehäuseteils 5 angeordnet. Ferner umfasst das Akkupack 1 eine Steuerungseinheit 24. In dem vorliegenden Ausführungsbeispiel ist die Steuerungseinheit 24 gemäß Figur 3 teils im ersten Gehäuseteil 5 und teils im zweiten Gehäuseteil 6 angeordnet. Die Steuerungseinheit 24 ist für die Überwachung und Regulation eines Lade- und Entladeprozesses der Akkumulatoren 23 zuständig, insbesondere um die Betriebssicherheit und Effizienz des Akkupacks 1 zu gewährleisten.

Die Steuerungseinheit 24 bietet demnach umfassenden Schutz für das Akkupack 1 und das im Betriebszustand damit verbundene und vorliegend nicht dargestellte Elektrogerät. Gemäß dem vorliegenden Ausführungsbeispiel ist die Steuerungseinheit 24 in eine Geräteschutzsteuerung 25 und eine Akkupackschutzsteuerung 26 aufgeteilt. Die Geräteschutzsteuerung 25 ist im zweiten Gehäuseteil 6, d.h. in dessen Inneren, untergebracht. Die Geräteschutzsteuerung 25 umfasst eine erste Leiterplatte 27 und/oder einen ersten Chip 29. Die Akkupackschutzsteuerung 26 befindet sich im ersten Gehäuseteil 5. Eine zweite Leiterplatte 28 und/oder ein zweiter Chip 30 sind Bestandteile der Akkupackschutzsteuerung 26. Auf die konkrete Ausgestaltung und Wirkweise der Steuerungseinheit 24, insbesondere der Geräteschutzsteuerung 25 und der Akkupackschutzsteuerung 26, wird nachfolgend noch detailliert eingegangen.

In der Figur 3 ist ersichtlich, dass die erste Innenschnittstelle 7 des ersten Gehäuseteils 5 und die zweite Innenschnittstelle 8 des zweiten Gehäuseteils 6 jeweils ein Führungselement 11, 12 aufweisen. Die Ausgestaltung dieser Führungselemente 11, 12 ermöglicht es, dass eines als Führungsschiene und das andere als Führungsschlitten dient, was eine präzise Führung der Gehäuseteile 5, 6 beim Verbinden und Trennen sicherstellt. Der erste Endanschlag 13 des ersten Gehäuseteils 5 und der korrespondierende zweite Endanschlag 13 des zweiten Gehäuseteils 6 limitieren die Beweglichkeit der Gehäuseteile 5, 6 auf eine exakte Endposition und verhindern eine Überbewegung während des Zusammensetzens, was eine zuverlässige und sichere Verbindung der beiden Gehäuseteile 5, 6 gewährleistet.

Wie insbesondere aus Figur 3 hervorgeht, umfasst das erste Gehäuseteil 5 zumindest ein elektrisches erstes Kontaktelement 14. Das zweite Gehäuseteil 6 weist zumindest ein elektrisches zweites Kontaktelement 15 auf, das mit dem ersten Kontaktelement 14 korrespondiert. Die elektrische Konnektivität zur Strom-, Informations- und/oder Datenübertragung zwischen den beiden Gehäuseteilen 5, 6 wird demnach zumindest durch die beiden korrespondierenden, elektrischen Kontaktelemente 14, 15 gewährleistet. Das erste Kontaktelement 14 und das zweite Kontaktelement 15 bilden ein Kontaktpaar.

Vorzugsweise umfasst das Akkupack 1 zumindest ein erstes Kontaktpaar, insbesondere ein Stromkontaktpaar, zur Stromübertragung. Demnach kann über das erste Kontaktpaar zum Betreiben eines Endgerätes oder zum Laden des Akkupacks 1 elektrischer Strom zwischen den beiden Gehäuseteilen 5, 6 übertragen werden. Beim Betreiben eines Endgerätes wird demnach elektrischer Strom von den Akkumulatoren 23 über das erste Kontaktpaar zur Geräteschnittstelle 4, insbesondere an zumindest einen Stromkontakt der Geräteschnittstelle 4, übertragen. Beim Laden des Akkupacks 1 wird elektrischer Strom von der Geräteschnittstelle 4, insbesondere von dem zumindest einen Stromkontakt, über das erste Kontaktpaar zu den Akkumulatoren 23 übertragen.

Zusätzlich ist es vorteilhaft, wenn das Akkupack 1 zumindest ein zweites Kontaktpaar, insbesondere ein Datenkontaktpaar, zur Datenübertragung umfasst. Demnach können über das zweite Kontaktpaar Daten, insbesondere Zustands- und/oder Steuerungsdaten, zwischen den beiden Gehäuseteilen 5, 6 übertragen werden. Die Datenübertragung kann hierbei insbesondere von der Akkupackschutzsteuerung 26 des ersten Gehäuseteils 5 über das zweite Kontaktpaar an die Geräteschutzsteuerung 25 des zweiten Gehäuseteils 6 erfolgen. Zusätzlich oder alternativ kann die Datenübertragung von der Akkupackschutzsteuerung 26 des ersten Gehäuseteils 5 über das zweite Kontaktpaar an die Geräteschnittstelle 4, insbesondere einen Datenkontakt der Geräteschnittstelle 4, erfolgen. Dies kann unmittelbar oder mittelbar über die Geräteschutzsteuerung 25 stattfinden. Zusätzlich oder alternativ können Daten von der Geräteschnittstelle 4, insbesondere vom Datenkontakt, und/oder von der Geräteschutzsteuerung 25 in der entgegengesetzten Richtung vom zweiten Gehäuseteil 6 an das erste Gehäuseteil 5, insbesondere die Akkupackschutzsteuerung 26, übertragen werden.

Vorzugsweise ist das zumindest eine erste Kontaktpaar und das zumindest eine zweite Kontaktpaar elektrisch voneinander isoliert und/oder getrennt und/oder gemäß der nachfolgenden Beschreibung ausgebildet.

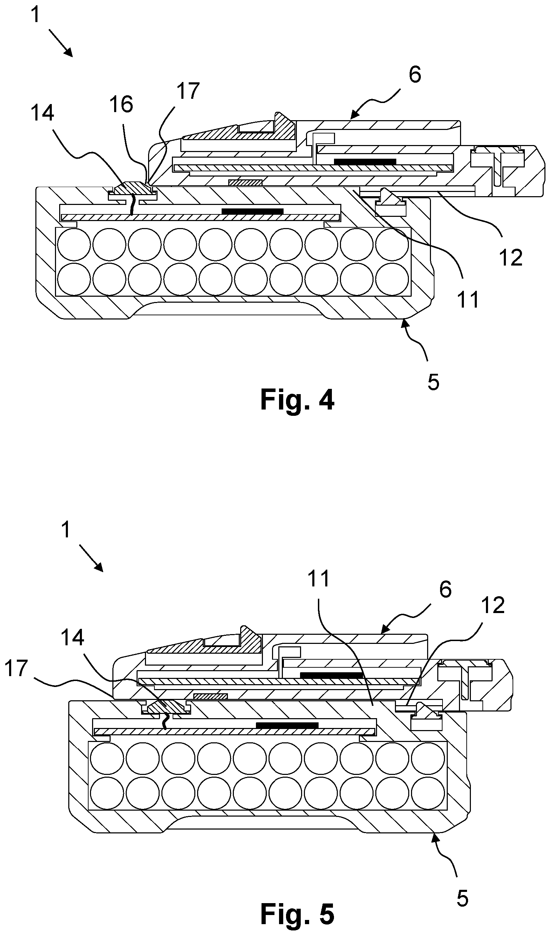

Das erste Kontaktelement 14 ist an der ersten Innenschnittstelle 7 positioniert. Ferner ist dieses vorzugsweise zwischen der in Figur 3 dargestellten ersten Position und einer zurückgedrängten zweiten Position bewegbar. Das erste Kontaktelement 14 ragt in seiner in Figur 3 dargestellten ersten Position, insbesondere in seiner Ruheposition, über die erste Gehäuseinnenseite 9 hinaus. Des Weiteren ist das erste Kontaktelement 14, insbesondere über ein vorliegend nicht dargestelltes Federelement, federbeaufschlagt in seine erste Position gedrückt. Beim Verbinden der Gehäuseteile 5, 6 wird das erste Kontaktelement 14 von einem korrespondierenden ersten Anschlagselement 17 des zweiten Gehäuseteils 6 gemäß Figur 4 und 5 in die zurückgedrängte zweite Position bewegt. Eine erste Anlaufschräge 16 erleichtert dabei die Bewegung des ersten Kontaktelements 14. Die erste Anlaufschräge 16 ist in dem vorliegenden Ausführungsbeispiel am ersten Kontaktelement 14 ausgebildet. Zusätzlich oder alternativ könnte diese erste Anlaufschräge 16 aber auch am ersten Anschlagselement 17 ausgebildet sein.

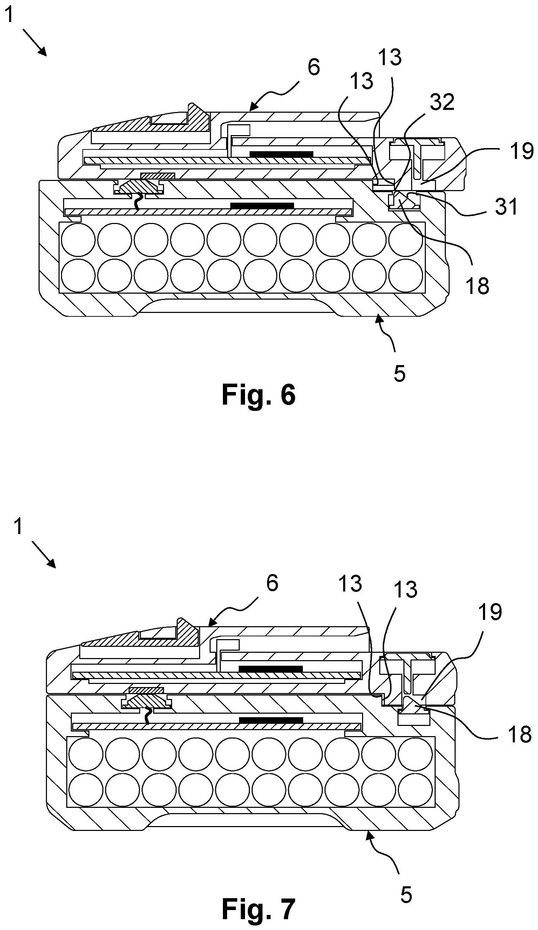

Wie insbesondere aus Figur 3 und 7 hervorgeht, ist zwischen den beiden Gehäuseteilen 5, 6 ein Verriegelungsmechanismus ausgebildet. Der Verriegelungsmechanismus umfasst ein erstes Verriegelungselement 18 und eine korrespondierende erste Verriegelungsaussparung 19. Das erste Verriegelungselement 18 ist beweglich. Ferner ist dieses, insbesondere über eine vorliegend nicht dargestellte Feder, federbeaufschlagt in die in Figur 3 und Figur 7 dargestellte Position gedrückt. Das erste Verriegelungselement 18 und die korrespondierende erste Verriegelungsaussparung 19 ermöglichen eine formschlüssige und sichere Verriegelung der Gehäuseteile 5, 6 im zusammengefügten Zustand. Gemäß dem vorliegenden Ausführungsbeispiel ist das erste Verriegelungselement 18 am ersten Gehäuseteil 5 und die korrespondierende erste Verriegelungsaussparung 19 am zweiten Gehäuseteil 6 ausgebildet. Alternativ könnte aber auch das erste Verriegelungselement 18 am zweiten Gehäuseteil 6 und die korrespondierende erste Verriegelungsaussparung 19 am ersten Gehäuseteil 5 ausgebildet sein.

Zum Entriegeln der beiden Gehäuseteile 5, 6 ist ein erstes Entriegelungselement 20 vorgesehen. Dieses ist im vorliegenden Ausführungsbeispiel am zweiten Gehäuseteil 6 angeordnet und ermöglicht dem Benutzer das manuelle Lösen der Verriegelung. Wie insbesondere aus Figur 3 hervorgeht, ist das erste Entriegelungselement 20 am zweiten Gehäuseteil 6 derart im Bereich der Geräteschnittstelle 4 angeordnet, dass dieses im mit dem vorliegend nicht dargestellten Elektrogerät verbundenen Zustand zumindest teilweise von dem Elektrogerät verdeckt ist und/oder von dem Benutzer nicht betätigt werden kann. Hierdurch wird verhindert, dass das erste Gehäuseteil 5 vom zweiten Gehäuseteil 6 gelöst werden kann, wenn das Akkupack 1 mit einem Elektrogerät verbunden ist. Alternativ könnte das erste Entriegelungselement 20 aber auch am ersten Gehäuseteil 5 angeordnet sein.

Die vorstehend erläuterte Anordnung und Ausgestaltung der Komponenten des Akkupacks 1 gewährleisten eine optimale Funktionsweise und bieten gleichzeitig eine hohe Sicherheit während des Betriebs. Darüber hinaus unterstützt diese Ausgestaltung die Wartungsfreundlichkeit und erleichtert den Austausch von Komponenten, insbesondere des ersten Gehäuseteils 5 oder des zweiten Gehäuseteils 6, ohne dass das gesamte Akkupack 1 ersetzt werden muss.

In den Figuren 3 bis 7 sind die beiden Gehäuseteil 5, 6 während des Verbindens zu unterschiedlichen Zeitpunkten dargestellt. Gemäß Figur 3 sind die beiden Gehäuseteile 5, 6 vollständig voneinander gelöst. Zum Verbinden werden diese translatorisch derart zueinander bewegt, dass gemäß Figur 4 das erste Führungselement 11 des ersten Gehäuseteils 5 formschlüssig in das zweite Führungselement 12 des zweiten Gehäuseteils 6 eingreift. Die beiden Gehäuseteile 5, 6 sind zu diesem Zeitpunkt über den Führungsmechanismus translatorisch zueinander geführt. Gemäß Figur 4 werden die beiden Gehäuseteilen 5, 6 soweit ineinandergeschoben, bis das erste Anschlagselement 17 des zweiten Gehäuseteils 6 das erste Kontaktelement 14 des ersten Gehäuseteils 5 berührt. Über die erste Anlaufschräge 16 wird das erste Kontaktelement 14 während des weiteren Ineinanderschiebens vom ersten Anschlagselement 17 zurückgedrängt, so dass die beiden Gehäuseteilen 5, 6 gemäß Figur 5 weiter ineinandergeschoben werden können. Wie aus Figur 6 hervorgeht, wird beim weiteren Ineinanderschieben auch das erste Verriegelungselement 18 zurückgedrängt. Hierfür weist das erste Verriegelungselement 18, insbesondere analog zum ersten Kontaktelement 14, eine zweite Anlaufschräge 31 auf. Diese zweite Anlaufschräge 31 kommt mit einem zweiten Anschlagselement 32 des zweiten Gehäuseteils 6 in Kontakt und wird von diesem beim weiteren Ineinanderschieben zurückgedrängt.

Vorliegend ist dieses zweite Anschlagselement 32 durch den Endanschlag 13 des zweiten Gehäuseteils 6 ausgebildet.

Gemäß Figur 7 rastet das zurückgedrängte erste Verriegelungselement 18 in der Endposition in die erste Verriegelungsaussparung 19 ein, so dass die beiden Gehäuseteilen 5, 6 formschlüssig zueinander fixiert sind. Des Weiteren liegen die beiden Endanschläge 13 des ersten und zweiten Gehäuseteils 5, 6 aneinander an, so dass ein Überschieben der beiden Gehäuseteile 5, 6 zueinander vermieden wird. In dieser in Figur 7 dargestellten Endposition ist nunmehr auch das erste Kontaktelement 14 und das zweite Kontaktelement 15 zueinander ausgerichtet. In dieser Endposition ist das erste Kontaktelement 14 federbeaufschlagt gegen das zweite Kontaktelement 15 gedrückt, so dass ein Stromfluss zwischen den beiden Gehäuseteilen 5, 6 gewährleistet ist.

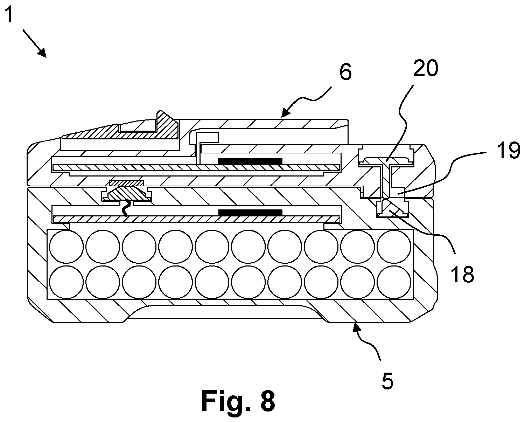

Um die beiden Gehäuseteilen 5, 6 wieder voneinander zu lösen, wird von einem Benutzer gemäß Figur 8 das erste Entriegelungselement 20 gedrückt. Dies ist nur möglich, wenn das Akkupack 1 über seine Geräteschnittstelle 4 mit keinem Elektrogerät verbunden ist. Nur dann ist das Entriegelungselement 20 zugänglich. Gemäß Figur 8 dringt das Entriegelungselement 20 beim Drücken in die erste Verriegelungsaussparung 19 ein. Hierbei gelangt das Entriegelungselement 20 mit dem ersten Verriegelungselement 18 in Kontakt und drängt dieses aus der Verriegelungsaussparung 19, so dass die beiden Gehäuseteile 5, 6 voneinander entriegelt sind. In diesem entriegelten Zustand können die beiden Gehäuseteile 5, 6 erneut zueinander translatorisch verschoben werden, nämlich zum Lösen in die entgegengesetzte Richtung.

### Bezugszeichenliste

- 1: Akkupack
- 2: Akkupackgehäuse
- 3: Gehäuseaußenseite
- 4: Geräteschnittstelle
- 5: erstes Gehäuseteil
- 6: zweites Gehäuseteil
- 7: erste Innenschnittstelle
- 8: zweite Innenschnittstelle
- 9: erste Gehäuseinnenseite
- 10: zweite Gehäuseinnenseite
- 11: erstes Führungselement
- 12: zweites Führungselement
- 13: Endanschlag
- 14: erstes Kontaktelement
- 15: zweites Kontaktelement
- 16: erste Anlaufschräge
- 17: erste Anschlagselement
- 18: erstes Verriegelungselement
- 19: erste Verriegelungsaussparung
- 20: erstes Entriegelungselement
- 21: zweites Entriegelungselement
- 22: zweites Verriegelungselement
- 23: Akkumulator
- 24: Steuerungseinheit
- 25: Geräteschutzsteuerung
- 26: Akkupackschutzsteuerung
- 27: erste Leiterplatte
- 28: zweite Leiterplatte
- 29: erster Chip
- 30: zweiter Chip
- 31: zweite Anlaufschräge
- 32: zweites Anschlagselement

## Patentansprüche

1. Akkupack (1) zum lösbaren Verbinden mit einem Elektrogerät mit einem Akkupackgehäuse (2), das eine Gehäuseaußenseite (3) aufweist, mit zumindest einem im Akkupackgehäuse (2) angeordneten Akkumulator (23), mit einer im Akkupackgehäuse (2) angeordneten Steuerungseinheit (24) und mit einer an der Gehäuseaußenseite (3) ausgebildeten Geräteschnittstelle (4) zum lösbaren Verbinden des Akkupacks (1) mit dem Elektrogerät, **dadurch gekennzeichnet, dass** das Akkupackgehäuse (2) ein erstes Gehäuseteil (5) und ein zweites Gehäuseteil (6) umfasst und dass das erste Gehäuseteil (5) eine erste Innenschnittstelle (7) und das zweite Gehäuseteil (6) eine mit der ersten Innenschnittstelle (7) korrespondierende zweite Innenschnittstelle (8) umfassen, über die das erste Gehäuseteil (5) und das zweite Gehäuseteil (6) mechanisch und elektrisch miteinander verbindbar sind.

2. Akkupack nach dem vorherigen Anspruch, **dadurch gekennzeichnet, dass** das erste Gehäuseteil (5) eine erste Gehäuseinnenseite (9) des Akkupackgehäuses (2) und das zweite Gehäuseteil (6) eine zweite Gehäuseinnenseite (10) des Akkupackgehäuses (2) umfasst und/oder dass die erste Gehäuseinnenseite (9) und die zweite Gehäuseinnenseite (10) im verbundenen Zustand der beiden Gehäuseteile (5, 6) im Inneren des Akkupackgehäuses (2) angeordnet sind und/oder sich im verbundenen Zustand der beiden Gehäuseteile (5, 6) gegenseitig zumindest teilweise überdecken.

3. Akkupack nach einem der vorherigen Ansprüche, dadurch gekennzeichnet, dass die erste Innenschnittstelle (7) an der ersten Gehäuseinnenseite (9) und die zweite Innenschnittstelle (8) an der zweiten Gehäuseinnenseite (10) angeordnet sind und/oder dass die beiden Innenschnittstellen (7, 8) derart ausgebildet sind, dass die beiden Gehäuseteile (5, 6) zum Verbinden und/oder Lösen, insbesondere translatorisch, zueinander bewegbar sind.

4. Akkupack nach einem der vorherigen Ansprüche, **dadurch gekennzeichnet, dass** zwischen den beiden Gehäuseteilen (5, 6) ein Führungsmechanismus ausgebildet ist, mittels dem die beiden Gehäuseteile (5, 6) beim Verbinden und/oder Lösen, insbesondere translatorisch, zueinander geführt sind, wobei vorzugsweise die erste Innenschnittstelle (7) ein erstes Führungselement (11) und die zweite Innenschnittstelle (8) ein mit dem ersten Führungselement (11) korrespondierendes zweites Führungselement (12) umfasst.

5. Akkupack nach einem der vorherigen Ansprüche, **dadurch gekennzeichnet, dass** die erste Innenschnittstelle (7) zumindest ein elektrisches erstes Kontaktelement (14) zum Übertragen von Strom und/oder Daten und die zweite Innenschnittstelle (8) zumindest ein mit dem ersten Kontaktelement (14) korrespondierendes zweites Kontaktelement (15) aufweist,
wobei vorzugsweise das erste Kontaktelement (14) und/oder das zweite Kontaktelement (15) federbeaufschlagt in eine erste Position gedrückt ist, in der das Kontaktelement (14, 15) über die zugeordnete Gehäuseinnenseite (9, 10) vorsteht, und/oder wobei das Kontaktelement (14, 15), insbesondere beim Verbinden der beiden Gehäuseteile (5, 6), aus seiner hervorstehenden ersten Position in eine zurückgedrängte zweite Position bewegbar ist.

6. Akkupack nach einem der vorherigen Ansprüche, **dadurch gekennzeichnet, dass** das erste Kontaktelement (14) und das zweite Kontaktelement (15) ein Kontaktpaar ausbilden und/oder
dass das Akkupack (1) ein erste Kontaktpaar zur Stromübertragung und/oder ein zweites Kontaktpaar zur Datenübertragung umfasst.

7. Akkupack nach einem der vorherigen Ansprüche, **dadurch gekennzeichnet, dass** zwischen den beiden Gehäuseteilen (5, 6), insbesondere zwischen den beiden korrespondierenden Innenschnittstellen (7, 8), ein Verriegelungsmechanismus ausgebildet ist, mittels dem die beiden Gehäuseteile (5, 6) im verbundenen Zustand, insbesondere formschlüssig, in ihrer Endlage verriegelbar sind.

8. Akkupack nach einem der vorherigen Ansprüche, **dadurch gekennzeichnet, dass** der Verriegelungsmechanismus ein an einem der beiden Gehäuseteile (5, 6), insbesondere am ersten Gehäuseteil (6), ausgebildetes erstes Verriegelungselement (18) und eine am anderen Gehäuseteil (5, 6) ausgebildete, korrespondierende erste Verriegelungsaussparung (19) umfasst, in die das erste Verriegelungselement (18) in seiner Verriegelungsstellung formschlüssig eingreifen kann.

9. Akkupack nach einem der vorherigen Ansprüche, **dadurch gekennzeichnet, dass** der Verriegelungsmechanismus ein erstes Entriegelungselement (20) umfasst, das von einem Benutzer zur Lösung der Verriegelung manuell betätigbar ist, wobei das erste Verriegelungselement (18) mittels des ersten Entriegelungselements (20) von dem Benutzer aus seiner Verriegelungsstellung in seine Entriegelungsstellung bewegbar ist.

10. Akkupack nach einem der vorherigen Ansprüche, **dadurch gekennzeichnet, dass** die Geräteschnittstelle (4) an dem zweiten Gehäuseteil (6) ausgebildet ist und dass das erste Entriegelungselement (20) am zweiten Gehäuseteil (6) derart im Bereich der Geräteschnittstelle (4) angeordnet ist, dass dieses im mit dem Elektrogerät (4) verbundenen Zustand zumindest teilweise von dem Elektrogerät (4) verdeckt ist und/oder von dem Benutzer nicht betätigt werden kann.

11. Akkupack nach einem der vorherigen Ansprüche, **dadurch gekennzeichnet, dass** die erste Innenschnittstelle (7) des ersten Gehäuseteils (5) und die Geräteschnittstelle (4) des zweiten Gehäuseteils (6) nicht-korrespondierend und/oder zueinander unterschiedlich ausgebildet sind.

12. Akkupack nach einem der vorherigen Ansprüche, **dadurch gekennzeichnet, dass** die Steuerungseinheit (24) eine Geräteschutzsteuerung (25) und/oder eine Akkupackschutzsteuerung (26) umfasst,
wobei vorzugsweise die Geräteschutzsteuerung (25) im zweiten Gehäuseteil (6) und/oder die Akkupackschutzsteuerung (26) im ersten Gehäuseteil (5) angeordnet ist.

13. Akkupack nach einem der vorherigen Ansprüche, **dadurch gekennzeichnet, dass** das zweite Gehäuseteil (6) eine elektronische Adaptereinheit umfasst, die derart ausgebildet ist, dass diese für ein im bestimmungsgemäßen Gebrauch an der Geräteschnittstelle (4) angeschlossenes Elektrogerät zumindest einen gerätespezifischen Steuerparameter, insbesondere einen Abschaltstrom, bestimmen kann; wobei in der elektronischen Adaptereinheit, insbesondere in einer Liste, für mehrere Elektrogeräte jeweils zumindest ein gerätespezifischer Steuerparameter, insbesondere zusammen mit einem Gerätekennwert, abgespeichert ist; und
wobei die elektronische Adaptereinheit im bestimmungsgemäßen Gebrauch einen gerätespezifischen Identifikationswert des an der Geräteschnittstelle angeschlossenen Elektrogeräts ermittelt und/oder mit den abgespeicherten Gerätekennwerten abgleicht und
bei Übereinstimmung den zumindest einen zum ermittelten Gerätekennwert dazugehörigen gerätespezifischen Steuerparameter selektiert und/oder an die Geräteschutzsteuerung übermittelt.

14. Erstes Gehäuseteil (5) eines Akkupackgehäuses (2) eines Akkupacks (1) gemäß dem vorherigen Anspruch 1 das eine erste Innenschnittstelle (7) umfasst, die mit einer zweiten Innenschnittstelle (8) eines zweiten Gehäuseteils (6) des Akkupackgehäuses (2) derart korrespondiert, dass das erste Gehäuseteil (5) mechanisch und elektrisch mit dem zweiten Gehäuseteil (6) verbindbar ist.

15. Zweites Gehäuseteil (6) eines Akkupackgehäuses (2) eines Akkupacks (1) gemäß dem vorherigen Anspruch 1 das eine zweite Innenschnittstelle (8) umfasst, die mit einer ersten Innenschnittstelle (7) eines ersten Gehäuseteils (5) des Akkupackgehäuses (2) derart korrespondiert, dass das zweite Gehäuseteil (6) mechanisch und elektrisch mit dem ersten Gehäuseteil (5) verbindbar ist.
